# EUROPEAN PATENT APPLICATION

(11) **EP 4 773 670 A1**
(43) Date of publication of application: **08.07.2026**
(21) Application number: 24870393.6
(22) Date of filing: 05.09.2024
(51) Int. Cl.: H04W 36/00

(54) **COMMUNICATION METHOD AND APPARATUS**

(30) Priority: 27.09.2023 CN 202311269916
(71) Applicant: HUAWEI TECHNOLOGIES CO., LTD., Shenzhen 518129 (CN)
(72) Inventor: WANG, Fei, Shenzhen, Guangdong 518129 (CN); WANG, Zhijian, Shenzhen, Guangdong 518129 (CN)
(74) Representative: MERH-IP Matias Erny Reichl Hoffmann Patentanwälte PartG mbB
(86) International application number: PCT/CN2024/117181
(87) International publication number: WO 2025/066847

(57) **Abstract**

This application relates to the field of communication technologies and discloses a communication method and apparatus. The method includes: A target primary base station receives measurement information of at least one cell from a source primary base station, and sends secondary base station addition request information to a target secondary base station after a terminal device is handed over from the source primary base station to the target primary base station, where the target secondary base station is selected, based on the measurement information of the at least one cell, from a base station to which the at least one cell belongs. According to the foregoing method, the target primary base station sends the secondary base station addition request information to the target secondary base station after the terminal device is handed over from the source primary base station to the target primary base station, and the target secondary base station is selected based on the measurement information of the at least one cell sent by the source primary base station, thereby improving a success rate of adding a secondary base station while reducing an interruption time of a service on the secondary base station.

## Description

### CROSS-REFERENCE TO RELATED APPLICATIONS

This application claims priority to Chinese Patent Application No. 202311269916.2, filed with the China National Intellectual Property Administration on September 27, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, two networking solutions: non-standalone (non-standalone, NSA) networking and standalone (standalone, SA) networking, are introduced in a 5^{th} generation (the 5^{th} generation, 5G) mobile communication technology standard. As a transitional solution, the non-standalone networking is mainly intended to enhance bandwidth in hotspot areas. In the non-standalone networking, 5G base stations has no independent signaling plane and operate based on 4^{th} generation (the 4^{th} generation, 4G) mobile communication technology base stations and 4G core networks. However, the standalone networking can achieve all new 5G features, which is conducive to leveraging 5G capabilities. The standalone networking is an industry-recognized target solution for 5G.

In an early stage of 5G network construction, the non-standalone networking solution is temporarily employed for constructing 5G networks due to practical problems such as technical capabilities and device costs. In the non-standalone networking solution, a terminal device may be simultaneously connected to two base stations. One base station is a 4G base station and may serve as a primary base station of the terminal device, and the other base station is a 5G base station and may serve as a secondary base station of the terminal device.

However, when the terminal device is simultaneously connected to the two base stations, how to implement a handover of the terminal device requires further research.

### SUMMARY

This application provides a communication method and apparatus, to improve a success rate of adding a target secondary base station while reducing interruption duration of a service on a secondary base station.

According to a first aspect, this application provides a communication method. The method may be applied to a target primary base station for a terminal device, or a processor, a chip, a chip system (for example, a system-on-a-chip (system-on-a-chip, SoC)), a functional module, or the like in the target primary base station. For example, the method is applied to the target primary base station. The target primary base station receives measurement information of at least one cell from a source primary base station. After the terminal device is handed over from the source primary base station to the target primary base station, the target primary base station sends secondary base station addition request information to a target secondary base station, where the secondary base station addition request information is used to add a secondary base station corresponding to the target primary base station, and the target secondary base station is selected, based on the measurement information of the at least one cell, from a base station to which the at least one cell belongs.

According to the foregoing method, the source primary base station first sends the measurement information of the at least one cell to the target primary base station, and after the terminal device is handed over from the source primary base station to the target primary base station, the target primary base station adds the target secondary base station, and the target secondary base station is selected based on the measurement information of the at least one cell, thereby improving a success rate of adding a secondary base station while reducing an interruption time of a service on the secondary base station.

In a possible design, the method further includes: receiving secondary base station addition request acknowledgment information from the target secondary base station, where the secondary base station addition request acknowledgment information includes first configuration information, and the first configuration information includes a parameter used by the terminal device to connect to the target secondary base station; and sending first information to the terminal device, where the first information includes the first configuration information, and the first information indicates the terminal device to connect to the target secondary base station.

In a possible design, the method further includes: sending second configuration information to the source primary base station, where the second configuration information includes a parameter used by the terminal device to hand over to the target primary base station.

In a possible design, receiving the measurement information of the at least one cell from the source primary base station includes: receiving handover request information from the source primary base station, where the handover request information is used to request to hand over the terminal device to the target primary base station, and the handover request information includes the measurement information of the at least one cell.

In a possible design, sending the secondary base station addition request information to the target secondary base station after the terminal device is handed over from the source primary base station to the target primary base station includes: after the terminal device is handed over from the source primary base station to the target primary base station, sending the secondary base station addition request information to the target secondary base station if it is determined that a preset condition is met, where the preset condition includes at least one of the following: A historical success rate of adding the target secondary base station by the target primary base station is greater than or equal to a first threshold; a historical success rate of a handover from the source primary base station to the target primary base station is greater than or equal to a second threshold; and a product of a historical success rate of adding the target secondary base station by the target primary base station and a historical success rate of a handover from the source primary base station to the target primary base station is greater than or equal to a third threshold.

In the way, the target primary base station autonomously determines a specific manner of adding the target secondary base station, making implementation more flexible.

In a possible design, the method further includes: if it is determined that the terminal device is not handed over from the source primary base station to the target primary base station, deleting the measurement information of the at least one cell.

In a possible design, determining that the terminal device is not handed over from the source primary base station to the target primary base station includes: receiving handover cancel information from the source primary base station, and determining, based on the handover cancel information, that the terminal device is not handed over from the source primary base station to the target primary base station; or if handover complete information from the terminal device is not received within a preset time period, determining that the terminal device is not handed over from the source primary base station to the target primary base station, where a start time of the preset time period is a time at which the measurement information of the at least one cell is received.

In a possible design, the source primary base station and the target primary base station correspond to a first communication standard, and the target secondary base station corresponds to a second communication standard.

According to a second aspect, this application provides a communication method. The method may be applied to a terminal device, or a processor, a chip, a chip system (for example, an SoC), a functional module, or the like in the terminal device. For example, the method is applied to the terminal device. The terminal device sends measurement information of at least one cell to a source primary base station. After the terminal device is handed over from the source primary base station to a target primary base station, the terminal device receives first information from the target primary base station, where the first information indicates the terminal device to establish a connection to a target secondary base station, and the target secondary base station is selected, based on the measurement information of the at least one cell, from a base station to which the at least one cell belongs. The terminal device establishes the connection to the target secondary base station based on the first information.

In a possible design, the method further includes: receiving second information from the source primary base station, where the second information indicates the terminal device to hand over to the target primary base station; receiving the second information; and handing over to the target primary base station based on the second information.

In a possible design, the source primary base station and the target primary base station correspond to a first communication standard, and the target secondary base station corresponds to a second communication standard.

According to a third aspect, this application provides a communication method. The method includes: A terminal device sends measurement information of at least one cell to a source primary base station; after receiving the measurement information of the at least one cell, the source primary base station sends the measurement information of the at least one cell to a target primary base station; and after determining that the terminal device is handed over from the source primary base station to the target primary base station, the target primary base station sends secondary base station addition request information to a target secondary base station, where the secondary base station addition request information is used to add a secondary base station corresponding to the target primary base station, and the target secondary base station is selected, based on the measurement information of the at least one cell, from a base station to which the at least one cell belongs.

In a possible design, the method further includes: The target secondary base station sends secondary base station addition request acknowledgment information to the target primary base station, where the secondary base station addition request acknowledgment information includes first configuration information, and the first configuration information includes a parameter used by the terminal device to connect to the target secondary base station; the target primary base station receives the first configuration information and sends first information to the terminal device, where the first information includes the first configuration information, and the first information indicates the terminal device to connect to the target secondary base station; and the terminal device establishes a connection to the target secondary base station based on the first information.

In a possible design, the method further includes: The target primary base station sends second configuration information to the source primary base station, where the second configuration information includes a parameter used by the terminal device to hand over to the target primary base station; the source primary base station receives the second configuration information and sends second information to the terminal device, where the second information indicates the terminal device to hand over to the target primary base station, and the second information includes the second configuration information; and the terminal device receives the second information, and is handed over to the target primary base station based on the second information.

In a possible design, after the terminal device is handed over from the source primary base station to the target primary base station, the target primary base station sends the secondary base station addition request information to the target secondary base station if it is determined that a preset condition is met, where the preset condition includes at least one of the following: A historical success rate of adding the target secondary base station by the target primary base station is greater than or equal to a first threshold; a historical success rate of a handover from the source primary base station to the target primary base station is greater than or equal to a second threshold; and a product of a historical success rate of adding the target secondary base station by the target primary base station and a historical success rate of a handover from the source primary base station to the target primary base station is greater than or equal to a third threshold.

In a possible design, the method further includes: The target primary base station deletes the measurement information of the at least one cell after determining that the terminal device is not handed over from the source primary base station to the target primary base station.

In a possible design, the method further includes: The target primary base station receives handover cancel information from the source primary base station, and determines, based on the handover cancel information, that the terminal device is not handed over from the source primary base station to the target primary base station; or if handover complete information from the terminal device is not received within a preset time period, determines that the terminal device is not handed over from the source primary base station to the target primary base station, where a start time of the preset time period is a time at which the measurement information of the at least one cell is received.

According to a fourth aspect, this application provides a communication system. The communication system includes a source primary base station and a target primary base station. The source primary base station is configured to send measurement information of at least one cell to the target primary base station. The target primary base station is configured to perform the method according to any possible design of the first aspect. Optionally, the communication system further includes a terminal device. The terminal device is configured to perform the method according to any possible design of the second aspect. Optionally, the communication system further includes a target secondary base station.

For example, the source primary base station is configured to send the measurement information of the at least one cell to the target primary base station. The target primary base station is configured to: receive the measurement information of the at least one cell, and send secondary base station addition request information to the target secondary base station after the terminal device is handed over from the source primary base station to the target primary base station, where the target secondary base station is selected, based on the measurement information of the at least one cell, from a base station to which the at least one cell belongs. The target secondary base station is configured to receive the secondary base station addition request information from the target primary base station.

In a possible design, the target secondary base station is further configured to send secondary base station addition request acknowledgment information to the target primary base station, where the secondary base station addition request acknowledgment information includes first configuration information, and the first configuration information includes a parameter used by the terminal device to connect to the target secondary base station. The target primary base station is further configured to: receive the first configuration information, and send first information to the terminal device, where the first information includes the first configuration information, and the first information indicates the terminal device to connect to the target secondary base station. The terminal device is configured to establish a connection to the target secondary base station based on the first information.

In a possible design, the target primary base station is further configured to send second configuration information to the source primary base station, where the second configuration information includes a parameter used by the terminal device to hand over to the target primary base station. The source primary base station is further configured to: receive the second configuration information, and send second information to the terminal device, where the second information indicates the terminal device to hand over to the target primary base station, and the second information includes the second configuration information. The terminal device is configured to receive the second information, and is handed over to the target primary base station based on the second information.

In a possible design, the target primary base station is specifically configured to: after the terminal device is handed over from the source primary base station to the target primary base station, send the secondary base station addition request information to the target secondary base station if it is determined that a preset condition is met, where the preset condition includes at least one of the following: A historical success rate of adding the target secondary base station by the target primary base station is greater than or equal to a first threshold; a historical success rate of a handover from the source primary base station to the target primary base station is greater than or equal to a second threshold; and a product of a historical success rate of adding the target secondary base station by the target primary base station and a historical success rate of a handover from the source primary base station to the target primary base station is greater than or equal to a third threshold.

In a possible design, the target primary base station is further configured to: after determining that the terminal device is not handed over from the source primary base station to the target primary base station, delete the measurement information of the at least one cell.

In a possible design, the target primary base station is specifically configured to: receive handover cancel information from the source primary base station, and determine, based on the handover cancel information, that the terminal device is not handed over from the source primary base station to the target primary base station; or if handover complete information from the terminal device is not received within a preset time period, determine that the terminal device is not handed over from the source primary base station to the target primary base station, where a start time of the preset time period is a time at which the measurement information of the at least one cell is received.

According to a fifth aspect, this application provides a communication apparatus. The communication apparatus can implement functions in the first aspect or the second aspect. For example, the communication apparatus includes a corresponding module, unit, or means for performing operations in the first aspect or the second aspect. The module, unit, or means may be implemented by using software, may be implemented by using hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect or the second aspect.

In a possible design, the communication apparatus includes a processor, and the processor may be configured to be coupled to a memory. The memory may store a computer program or instructions necessary for implementing the functions in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In a possible design, the communication apparatus includes a processor and a memory. The memory may store a computer program or instructions necessary for implementing the functions in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In a possible design, the communication apparatus includes a processor and an interface circuit. The processor is configured to communicate with another apparatus through the interface circuit, and perform the method according to any possible design or implementation of the first aspect or the second aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. In addition, there may be one or more processors, and one or more memories. The memory may be integrated with the processor, or the memory and the processor are separately disposed. In a specific implementation process, the memory and the processor may be integrated into one chip, or may be separately disposed on different chips. A type of the memory and a manner of disposing the memory and the processor are not limited in embodiments of this application.

According to a sixth aspect, this application provides a computer-readable storage medium. The computer storage medium stores a computer program (or computer-readable instructions). When a computer reads and executes a part or all of the computer-readable instructions, the method according to any possible design of the first aspect or the second aspect is performed.

For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, this application provides a computer program product. When a computer reads and executes the computer program product, the method according to any possible design of the first aspect or the second aspect is performed.

According to an eighth aspect, this application provides a chip (or a chip system). The chip includes a processor. The processor is coupled to a memory. The memory stores a computer program. The processor is configured to invoke a part or all of the computer program in the memory, and the method according to any possible design of the first aspect or the second aspect is performed.

### BRIEF DESCRIPTION OF DRAWINGS

FIG. 1 is a diagram of a network architecture to which an embodiment of this application is applicable;
FIG. 2 is a diagram of dual connectivity according to an embodiment of this application;
FIG. 3 is a schematic flowchart of an implementation for adding a secondary base station according to an embodiment of this application;
FIG. 4 is a schematic flowchart corresponding to a communication method according to an embodiment of this application;
FIG. 5 is a schematic flowchart corresponding to a communication method according to an embodiment of this application;
FIG. 6 is a block diagram of a possible example of an apparatus according to an embodiment of this application; and
FIG. 7 is a diagram of a structure of a communication apparatus according to an embodiment of this application.

### DESCRIPTION OF EMBODIMENTS

The following describes the technical solutions in embodiments of this application with reference to accompanying drawings in embodiments of this application. The technical solutions in embodiments of this application may be applied to various communication systems, for example, a 4G communication system (for example, a long term evolution (long term evolution, LTE) system), a 5G mobile communication system (for example, a new radio (new radio, NR) system), a transitional system between the 4G communication system and the 5G communication system, or a future evolved communication system.

Particularly, embodiments of this application are applicable to dual connectivity (dual connectivity, DC), for example, a dual connectivity scenario in non-standalone networking. The dual connectivity (dual connectivity) is also referred to as an inter-base station carrier aggregation technology or multi-stream aggregation technology. The dual connectivity means that a terminal device simultaneously receives data from two base stations. In other words, the two base stations simultaneously provide a communication service for user equipment. One of the two base stations is a master base station (master base station) or referred to as a master node (master node, MN), and the other base station is referred to as a secondary base station (secondary base station) or referred to as a secondary node (secondary node, SN). A cell group provided by the master base station may be referred to as a master cell group (master cell group, MCG), and a cell group provided by the secondary base station may be referred to as a secondary cell group (secondary cell group, SCG).

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used. In addition, in embodiments of this application, terms such as "example" and "for example" indicate giving an example, an illustration, or a description. Any embodiment or design scheme described as an "example" in this application should not be explained as being more preferred or having more advantages than another embodiment or design scheme. Exactly, the term "example" is intended to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences of the terms are not emphasized.

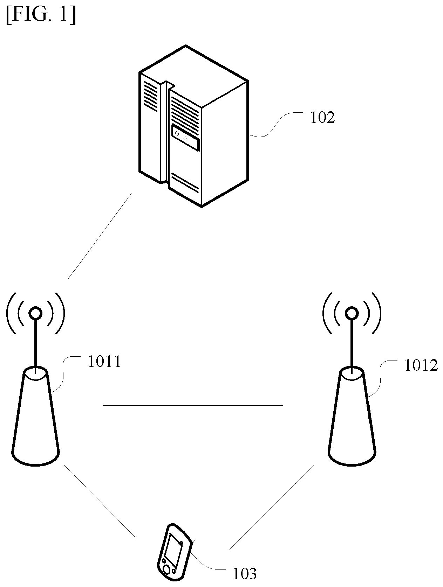

For ease of understanding embodiments of this application, a network architecture applicable to embodiments of this application is first described in detail by using the network architecture shown in FIG. 1 as an example. As shown in FIG. 1, a terminal device 103 may access an operator network, to obtain a service of an external network (for example, the Internet) through the operator network, or to communicate with another device through the operator network, for example, communicate with another terminal device.

The operator network includes an access network (for example, a radio access network (radio access network, RAN)) and a core network (core network, CN). The access network is used to connect the terminal device 103 to the operator network, and the core network is used to manage the terminal device and provide a gateway for communication with the external network. The access network may include one or more access network devices, for example, an access network device 1011 and an access network device 1012, and the core network may include one or more core network devices, for example, a core network device 102. The terminal device 103 may be simultaneously connected to two access network devices through the dual-connectivity, for example, the access network device 1011 and the access network device 1012.

### (1) Access network device

The access network device may also be referred to as a base station (base station). Currently, examples of some access network devices are: an evolved NodeB (evolved NodeB, eNB) (namely, a 4G base station), an access point (access point, AP), a transmission reception point (transmission reception point, TRP), a next generation base station (next generation NodeB, gNB) (namely, a 5G base station), a base station in a future mobile communication system, and the like. The access network device may be a macro base station, a micro base station, an indoor base station, a relay node, or a donor node, or a radio controller in an open radio access network (open RAN, O-RAN, or ORAN) or a cloud radio access network (cloud radio access network, CRAN) scenario. Optionally, the access network device may alternatively be a server, a wearable device, a vehicle, a vehicle-mounted device, or the like. All or the part of functions of the access network device in this application may alternatively be implemented by using a software function running on hardware, or may be implemented by using an instantiated virtualization function on a platform (for example, a cloud platform). The access network device in this application may alternatively be a logical node, a logical module, or software that can implement all or the part of the functions of the access network device.

In embodiments of this application, the functions of the access network device may alternatively be executed by a module (for example, a chip) in the access network device, or may alternatively be executed by a control subsystem including the functions of the access network device. The control subsystem including the functions of the access network device herein may be a control center in application scenarios such as a smart grid, industrial control, smart transportation, and a smart city.

### (2) Terminal device

The terminal device may also be referred to as user equipment (user equipment, UE), a terminal, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal device in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless receiving /transmitting function, a machine type communication (machine type communication, MTC) terminal device, a virtual reality (virtual reality, VR) terminal device, an augmented reality (augmented reality, AR) terminal device, an internet of things (internet of things, IoT) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device (for example, a game console, a smart television, a smart speaker, a smart refrigerator, or fitness equipment) in a smart home (smart home), or a vehicle-mounted terminal device.

A function of the terminal device may alternatively be performed by a module (for example, a chip or a modem) in the terminal device, or may be performed by an apparatus including a terminal function.

In addition, an access network device and the terminal device may be at fixed positions, or may be movable. The access network device and the terminal device may be deployed on land, including an indoor device, and outdoor device, a handheld device, or a vehicle-mounted device; may be deployed on a water surface; or may be deployed on a plane, a balloon, or an artificial satellite in the air. Application scenarios of the access network device and the terminal device are not limited in embodiments of this application.

### (3) Core network device

The core network may include a plurality of core network devices or core network elements, and an access network device may be connected to the core network element in a wireless or wired manner. The core network element and a radio access network device may be different physical devices that are independent of each other, functions of the core network element and logical functions of the radio access network device may be integrated into a same physical device, or a part of functions of the core network element and a part of functions of the radio access network device may be integrated into one physical device.

A 4G communication system is used as an example. A core network of the 4G communication system may be referred to as an evolved packet core (evolved packet core, EPC) network, and the EPC may include core network devices such as a mobility management entity (mobility management entity, MME) and a serving gateway (serving gateway, S-GW).

It should be understood that the network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of a communication network architecture and emergence of new service scenarios, the technical solutions provided in embodiments of this application are also applicable to similar technical problems. In addition, FIG. 1 is merely a diagram. The access network of the network architecture may further include another access network device, for example, may further include a wireless relay device and a wireless backhaul device.

Based on the network architecture shown in FIG. 1, the following describes related terms in embodiments of this application. It should be noted that these explanations are intended to make embodiments of this application easier to understand, but should not be considered as a limitation on the protection scope claimed in this application.

### (1) Dual connectivity in non-standalone networking

In the network architecture shown in FIG. 1, when a non-standalone networking solution is used, both the 5G communication system and the 4G communication system may be deployed. The terminal device 103 may communicate with a network by using an LTE-NR dual connectivity technology. To be specific, the terminal device 103 supports simultaneous access to both a 4G base station and a 5G base station. For example, the access network device 1011 is a 4G base station, and the access network device 1012 is a 5G base station. Because the 4G communication system is also referred to as evolved universal terrestrial radio access (evolved universal terrestrial radio access, E-UTRA), such an access manner is referred to as evolved universal terrestrial radio access and new radio dual connectivity (E-UTRA NR dual connectivity, EN-DC). In an EN-DC mode, the 4G base station is a master base station, and may be referred to as a master evolved base station (master evolved NodeB, MeNB), and the 5G base station is a secondary base station, and may be referred to as a secondary next generation base station (secondary next generation NodeB, SgNB).

It may be understood that, with evolution of the communication system, new radio and evolved universal terrestrial radio access dual connectivity (NR E-UTRA dual connectivity, NE-DC) may also be supported in the future. In other words, the 4G base station is a secondary base station, and the 5G base station is a master base station.

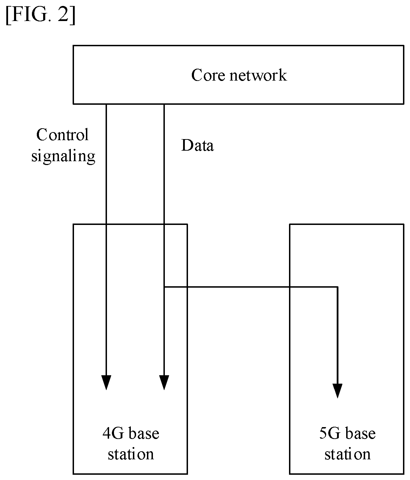

The EN-DC is used as an example. As shown in FIG. 2, on a control plane, a 4G base station may receive control signaling from a core network device (for example, an MME), and control a terminal device or a 5G base station based on the control signaling. The control signaling may be a plurality of possible types of signaling. This is not specifically limited.

In a downlink direction of a user plane, as shown in FIG. 2, the 4G base station may receive data from the core network device (for example, a serving gateway), and send the data to the terminal device, or send the data to the 5G base station, and the 5G base station sends the data to the terminal device. In an uplink direction of the user plane, the terminal device may send data to the 4G base station, and the 4G base station may send the data to the core network device; or the terminal device sends data to the 5G base station, the 5G base station sends the data to the 4G base station, and then the 4G base station sends the data to the core network device.

### (2) Auxiliary base station addition

After a terminal device accesses a 4G base station, the 4G base station may add a secondary base station (namely, a 5G base station) for the terminal device, so that the terminal device is connected to the 4G base station and the 5G base station through dual-connectivity.

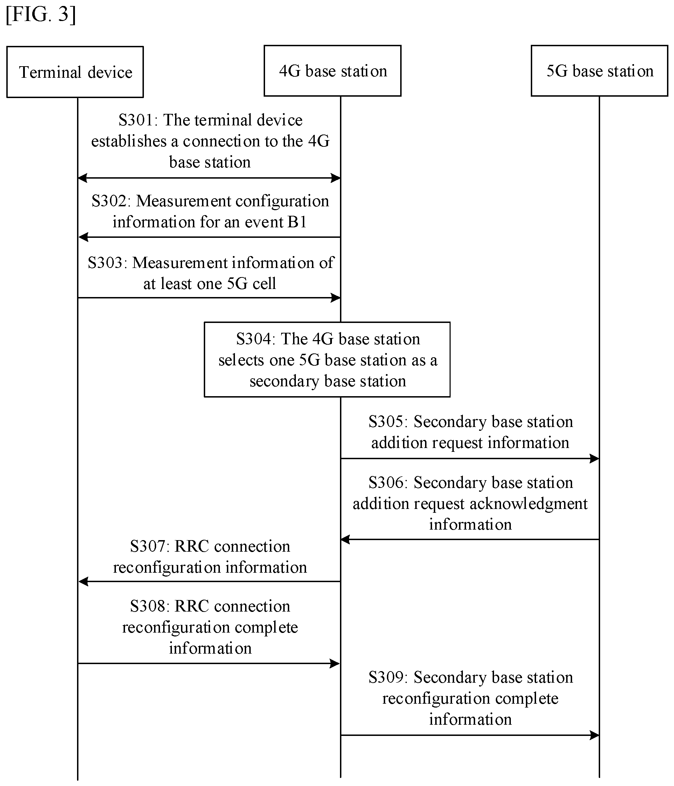

FIG. 3 is a possible implementation procedure of adding the secondary base station. As shown in FIG. 3, the procedure may include the following steps.

S301: A terminal device establishes a connection to a 4G base station.

Herein, the terminal device may access the 4G base station through an initial access procedure, a handover procedure, a radio resource control (radio resource control, RRC) re-establishment procedure, a cell reselection procedure, or the like, that is, establish an RRC connection to the 4G base station.

S302: The 4G base station sends measurement configuration information (for example, measurement configuration information for an event B1) to the terminal device, where the measurement configuration information indicates the terminal device to measure a neighboring NR cell.

S303: The terminal device measures a neighboring 5G cell based on the measurement configuration information for the event B1, and reports measurement information of at least one 5G cell.

For example, after the terminal device obtains the measurement information of the at least one 5G cell through measurement, if the measurement information of the at least one 5G cell meets a reporting condition of the event B1, the terminal device may report the measurement information of the at least one 5G cell.

S304: The 4G base station receives the measurement information of the at least one 5G cell, and selects, based on the measurement information of the at least one 5G cell, a 5G base station to which the at least one 5G cell belongs, as a secondary base station.

S305: The 4G base station sends secondary base station addition request (for example, SgNB addition request) information to the selected 5G base station.

The secondary base station addition request information is used to request to add the 5G base station as the secondary base station of the terminal device.

S306: The 5G base station sends secondary base station addition request acknowledgment (for example, SgNB Addition Request ACK) information to the 4G base station.

The secondary base station addition request acknowledgment information may also be referred to as secondary base station addition response (for example, SgNB addition response) information. The secondary base station addition request acknowledgment information includes a parameter used by the terminal device to connect to the 5G base station, for example, a synchronization signal block (synchronization signal block, SSB) frequency and beam information of the 5G base station.

S307: The 4G base station receives the secondary base station addition request acknowledgment information, and sends RRC connection reconfiguration (RRC connection reconfiguration) information to the terminal device.

The RRC connection reconfiguration information indicates the terminal device to establish a connection to the 5G base station (the connection may be a 5G user plane connection), and the RRC connection reconfiguration information includes a parameter used by the terminal device to connect to the 5G base station.

S308: The terminal device sends RRC connection reconfiguration complete information to the 4G base station.

For example, the terminal device may establish the connection to the 5G base station based on the RRC connection reconfiguration information, that is, add the 5G base station as the secondary base station, to establish dual connectivity.

S309: After receiving the RRC connection reconfiguration complete information, the 4G base station sends secondary base station reconfiguration complete (for example, SgNB reconfiguration complete) information to the 5G base station, and correspondingly, the 5G base station receives the secondary base station reconfiguration complete information, to complete addition of the secondary base station.

### (3) Handover

The handover is a process, initiated by a network side, for a terminal device in an RRC connected state, and is related to signaling interaction between the terminal device and a base station. For example, when the base station perceives that signal strength of the terminal device in a cell of the base station gradually becomes weak, the base station may hand over the terminal device to a cell of a base station (for example, a neighboring base station) with better signal strength.

For a dual connectivity scenario, when a primary base station that provides a service for the terminal device is handed over, the secondary base station may be handed over or may remain unchanged. In embodiments of this application, a primary base station that provides a service for the terminal device before the handover is referred to as a source primary base station, and a primary base station that provides a service for the terminal device after the handover is referred to as a target primary base station. Similarly, the secondary base station that provides a service for the terminal device before the handover is referred to as a source secondary base station, and a secondary base station that provides a service for the terminal device after the handover is referred to as a target secondary base station.

A dual connectivity scenario in non-standalone networking is used as an example. When the terminal device needs to be handed over from the source primary base station to the target primary base station, in a first implementation, before the terminal device is handed over to the target primary base station, the target primary base station adds the target secondary base station. In this way, after the terminal device is handed over to the target primary base station, a service (for example, a 5G service) on the secondary base station can be quickly resumed, thereby reducing an interruption time of the 5G service. However, in this manner, whether the target secondary base station is successfully added depends on whether the primary base station is successfully handed over. If the terminal device is successfully handed over to the target primary base station, the target primary base station may successfully add the target secondary base station. If the terminal device is not successfully handed over to the target primary base station, the target secondary base station also fails to be added. As a result, a failure rate of adding the target secondary base station is higher (but a failure of adding the target secondary base station is caused by a handover failure of the primary base station, not caused by the target secondary base station).

In a second implementation, after the terminal device is handed over to the target primary base station, the source primary base station adds the target secondary base station. In this manner, the secondary base station is added after the primary base station completes the handover normally, to ensure a success rate of adding the secondary base station. However, in this manner, the secondary base station is first released when the terminal device is handed over between primary base stations, and after the terminal device is handed over to the target primary base station, the secondary base station is added by using the method shown in FIG. 3 (that is, sends measurement configuration information to the terminal device, receives measurement information of at least one 5G cell reported by the terminal device, selects the secondary base station, and sends secondary base station addition request information to the secondary base station). As a result, an interruption time of a service (for example, a 5G service) on the secondary base station is longer.

In view of this, research on handover of the terminal device in the dual connectivity scenario is made in embodiments of this application. For example, an embodiment of this application provides a communication method, to improve a success rate of adding the target secondary base station while reducing interruption duration of a service on the secondary base station.

The following describes the technical solutions provided in embodiments of this application in detail with reference to Embodiment 1 and Embodiment 2.

### Embodiment 1

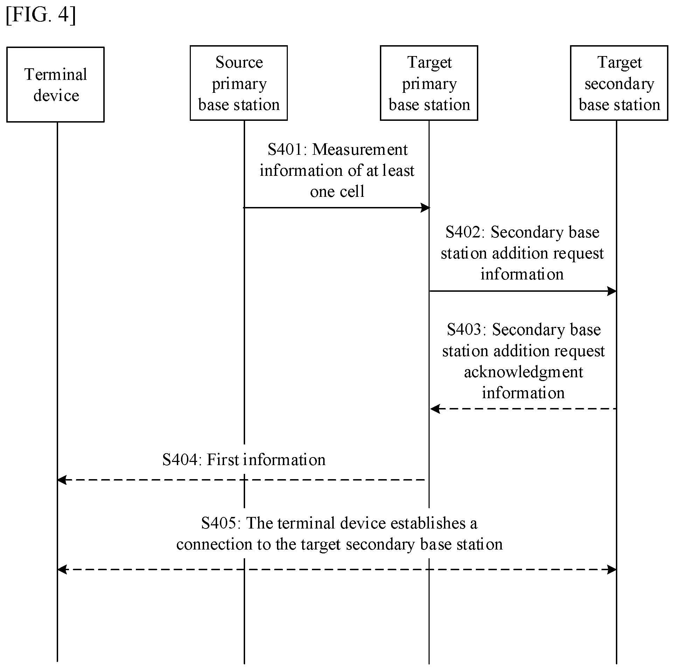

FIG. 4 is a schematic flowchart corresponding to a communication method according to Embodiment 1 of this application. As shown in FIG. 4, the method includes the following steps.

S401: A source primary base station sends measurement information of at least one cell to a target primary base station, and correspondingly, the target primary base station receives and stores the measurement information of the at least one cell.

For example, the measurement information of the at least one cell may be reported by a terminal device to the source primary base station. For example, after the terminal device establishes dual connectivity to the source primary base station and a source secondary base station, the source secondary base station may send measurement configuration information (for example, measurement configuration information for an event A3 and measurement configuration information for an event A4) to the source primary base station, so that the source primary base station sends the measurement configuration information to the terminal device. Correspondingly, the terminal device may measure, based on the measurement configuration information, a source secondary cell (namely, a serving cell) of the terminal device and a neighboring cell of the source secondary cell, and report the measurement information of the at least one cell to the source primary base station. The at least one cell includes the source secondary cell of the terminal device and/or the neighboring cell of the source secondary cell, and the at least one cell is a candidate cell of a target secondary cell. A cell 1 in the at least one cell is used as an example. Measurement information of the cell 1 may include at least one of reference signal received power (reference signal received power, RSRP), reference signal received quality (reference signal received quality, RSRQ), and a signal-to-interference-plus-noise ratio (signal to interference plus noise ratio, SINR).

In this embodiment of this application, the source primary base station and the target primary base station correspond to a first communication standard, and a target secondary base station (and the source secondary base station) corresponds to a second communication standard. A dual connectivity scenario in non-standalone networking is used as an example. The first communication standard is a communication standard employed by a 4G communication system, and the second communication standard is a communication standard employed by a 5G communication system. To be specific, the source primary base station and the target primary base station are 4G base stations, and the target secondary base station (and the source secondary base station) is a 5G base station. In this case, all cells in a master cell group are 4G cells, and all cells in a secondary cell group are 5G cells. For example, the at least one cell is a 5G cell.

For example, after determining that a terminal needs to be handed over to the target primary base station, the source primary base station may send the measurement information of the at least one cell to the target primary base station. In a possible implementation, the source primary base station sends handover request (handover request) information to the target primary base station. The handover request information includes the measurement information of the at least one cell. For example, the handover request information includes an NR Neighbor Information IE field, and the field carries the measurement information of the at least one cell. In still another possible implementation, the source primary base station sends information a (the information a is information other than the handover request information) to the target primary base station. The information a includes the measurement information of the at least one cell. For example, the source primary base station may first send the handover request information to the target primary base station, and then send the information a to the target primary base station. An order in which the source primary base station sends the handover request information and the information a is not limited in this embodiment of this application.

In addition, after receiving the handover request information, the target primary base station may send handover request acknowledgment information to the source primary base station. The handover request acknowledgment information includes second configuration information. The second configuration information includes a parameter used by the terminal device to hand over to the target primary base station, for example, an SSB frequency and beam information of the target primary base station.

Correspondingly, after receiving the handover request acknowledgment information, the source primary base station may send second information to the terminal device. The second information indicates the terminal device to hand over to the target primary base station, and the second information includes the second configuration information. For example, the second information may be RRC connection reconfiguration information.

Correspondingly, after receiving the second information, the terminal device may release a connection between the terminal device and the source primary base station, release a connection between the terminal device and the source secondary base station, and is handed over to the target primary base station based on the second configuration information. For example, the terminal device may initiate a random access procedure to the target primary base station based on the second configuration information, to perform synchronization with the target primary base station through the random access procedure. After completing the synchronization, the terminal device may send handover complete information to the target primary base station. The handover complete information may be RRC connection reconfiguration complete information. For example, if the second configuration information includes beam information, the terminal device may select a corresponding beam based on the beam information and establish a connection to the target primary base station.

S402: After the terminal device is handed over from the source primary base station to the target primary base station, the target primary base station sends secondary base station addition request information to the target secondary base station, where the secondary base station addition request information is used to add a secondary base station corresponding to the target primary base station.

Herein, there are a plurality of implementations in which the target primary base station determines that the terminal device is handed over from the source primary base station to the target primary base station. For example, after receiving the handover complete information from the terminal device, the target primary base station may determine that the terminal device is handed over from the source primary base station to the target primary base station.

For example, the target primary base station may select, based on the measurement information of the at least one cell that is received from the source primary base station, the target secondary base station from a base station to which the at least one cell belongs. Optionally, the target primary base station may further select, based on other information (for example, load of the base station to which the at least one cell belongs), the target secondary base station from the base station to which the at least one cell belongs.

For example, the at least one cell includes cells 1 to 5, the cell 1 and the cell 2 belong to a base station 1, the cell 3 and the cell 4 belong to a base station 2, and the cell 5 belongs to a base station 3. For example, if measurement information of the cell 1 is better than measurement information of other four cells (for example, RSRP of the cell 1 is highest), the target primary base station may select the cell 1 as the target secondary cell and select the base station 1 as the target secondary base station. For another example, the target primary base station may first select, from the cells 1 to 5, a cell whose measurement information is greater than or equal to a threshold 1, and then select, from base stations to which the selected cell belongs, a base station whose load is less than or equal to a threshold 2 as the target secondary base station. The threshold 1 and the threshold 2 may be preconfigured values.

A specific occasion on which the target primary base station selects the target secondary base station is not limited in this embodiment of this application. For example, after receiving the measurement information of the at least one cell, the target primary base station may select the target secondary base station, and after the terminal device is handed over from the source primary base station to the target primary base station, the target primary base station sends the secondary base station addition request information to the target secondary base station. In this way, after the terminal device is handed over from the source primary base station to the target primary base station, the target primary base station may immediately send the secondary base station addition request information to the target secondary base station, to facilitate rapid addition of a secondary base station and reduce interruption duration of a service on the secondary base station.

For another example, alternatively, after receiving the measurement information of the at least one cell, the target primary base station may first not select the target secondary base station, and after determining that the terminal device is handed over from the source primary base station to the target primary base station, the target primary base station selects the target secondary base station based on the stored measurement information of the at least one cell, and sends the secondary base station addition request information to the target secondary base station. In this way, it is considered that if the terminal device is not successfully handed over to the target primary base station, the target primary base station does not need to perform an operation of adding the secondary base station either, and therefore, the target primary base station may perform an operation of selecting the target secondary base station after the terminal device is handed over from the source primary base station to the target primary base station.

Optionally, the foregoing method further includes the following steps.

S403: The target secondary base station sends secondary base station addition request acknowledgment information to the target primary base station, and correspondingly, the target primary base station receives the secondary base station addition request acknowledgment information.

Herein, the secondary base station addition request acknowledgment information includes first configuration information, and the first configuration information includes a parameter used by the terminal device to connect to the target secondary base station, for example, an SSB frequency and beam information of the target secondary base station.

S404: The target primary base station sends first information to the terminal device, where the first information indicates the terminal device to connect to the target secondary base station.

Herein, the first information may include the first configuration information, and the first information may be RRC connection reconfiguration information.

S405: The terminal device establishes a connection to the target secondary base station based on the first information.

Therefore, the terminal device is connected to the target primary base station and the target secondary base station through dual connectivity. The connection established between the terminal device and the target secondary base station may be a user plane connection, for example, a 5G user plane connection.

It may be understood that the target secondary base station selected by the target primary base station and the source secondary base station may be a same base station, or may be different base stations. This is not limited in this embodiment of this application.

According to the foregoing method, the source primary base station first sends the measurement information of the at least one cell to the target primary base station, and after the terminal device is handed over from the source primary base station to the target primary base station, the target primary base station adds the target secondary base station, and the target secondary base station is selected based on the measurement information of the at least one cell, thereby improving a success rate of adding the target secondary base station while reducing interruption time of the service on the secondary base station. Specifically, in comparison with the first implementation, in the foregoing embodiment, the target primary base station adds the target secondary base station after the terminal device is handed over from the source primary base station to the target primary base station. Therefore, whether the terminal device is successfully handed over between primary base stations does not affect the success rate of adding the secondary base station, thereby avoiding a problem of a high failure rate in adding the secondary base station due to an unsuccessful handover of the terminal device to the target primary base station. In comparison with the second implementation, in the foregoing embodiment, the source primary base station first sends the measurement information of the at least one cell to the target primary base station. Therefore, after the terminal device is handed over from the source primary base station to the target primary base station, the target primary base station does not need to send the measurement configuration information to the terminal device, and the terminal device does not need to measure and report the measurement information of the at least one cell based on the measurement configuration information, thereby reducing the interruption duration of the service on the secondary base station.

In addition, the following should be noted:
(1) The foregoing procedure is described by using an example in which the terminal device is successfully handed over from the source primary base station to the target primary base station. In another example, if it is determined that the terminal device is not handed over from the source primary base station to the target primary base station (that is, the handover fails), the target primary base station may delete the measurement information of the at least one cell.

There are a plurality of manners in which the target primary base station determines that the terminal device is not handed over from the source primary base station to the target primary base station.

In a possible manner, the target primary base station receives handover cancel information from the source primary base station, and determines, based on the handover cancel information, that the terminal device is not handed over from the source primary base station to the target primary base station. For example, when the terminal device is not handed over from the source primary base station to the target primary base station, if the terminal device resumes an RRC connection to the source primary base station through an RRC re-establishment procedure, the source primary base station may send the handover cancel information to the target primary base station when receiving an RRC re-establishment request of the terminal device. For another example, when the terminal device is not handed over from the source primary base station to the target primary base station, if the terminal device accesses another base station (that is, a base station other than the source primary base station and the target primary base station), a core network device may send UE context release information to the source primary base station. After receiving the UE context release information from the core network device, the source primary base station may send the handover cancel information to the target primary base station.

In still another possible manner, if the target primary base station does not receive the handover complete information from the terminal device within a preset time period 1, it is determined that the terminal device is not handed over from the source primary base station to the target primary base station. A start time of the preset time period 1 may be a time at which the measurement information of the at least one cell is received or a time at which the handover request information is received. For example, when receiving the measurement information (or the handover request information) of the at least one cell, the target primary base station may start a timer. If the handover complete information from the terminal device is not received before the timer expires, it is determined that the terminal device is not handed over from the source primary base station to the target primary base station. Duration of the timer is duration of the preset time period 1, and the duration may be preconfigured.

In addition, in another example, when the terminal device is not handed over from the source primary base station to the target primary base station, if the target primary base station does not receive the handover cancel information from the source primary base station within a preset time period 2, the target primary base station may also delete the measurement information of the at least one cell. A start time of the preset time period 2 may be a time at which the measurement information of the at least one cell is received or a time at which the handover request information is received. Duration of the preset time period 2 may be preconfigured.

(2) In this embodiment of this application, it may be preconfigured in the target primary base station that "if the measurement information of the at least one cell is received from the source primary base station, S402 is performed". For example, a switch may be set in the target primary base station, and a related person preconfigures a status of the switch. When the status of the switch is "on", if the target primary base station receives the measurement information of the at least one cell from the source primary base station, S402 is performed; or when the status of the switch is "off", if the target primary base station receives the measurement information of the at least one cell from the source primary base station, before the terminal device is handed over to the target primary base station, the target primary base station may send the secondary base station addition request information to the target secondary base station (that is, the foregoing first implementation). For example, the status of the switch may be manually set by the related person. A specific form of the switch and a specific manner of the preconfigured status are not limited in this embodiment of this application.

Alternatively, if receiving the measurement information of the at least one cell from the source primary base station, the target primary base station may autonomously determine whether to send the secondary base station addition request information to the target secondary base station after the terminal device is handed over from the source primary base station to the target primary base station, or send the secondary base station addition request information to the target secondary base station before the terminal device is handed over from the source primary base station to the target primary base station. There may be a plurality of determining bases. For example, the determining basis includes a historical success rate of adding the target secondary base station by the target primary base station and/or a historical success rate of a handover from the source primary base station to the target primary base station.

The historical success rate of adding the target secondary base station by the target primary base station may be statistically obtained by the target primary base station. For example, the target primary base station initiates a total of 100 secondary base station addition requests to the target secondary base station (not limited to the specific terminal device) within a preset time period 3 (for example, 24 hours). If 90 additions succeed, the historical success rate of adding the target secondary base station by the target primary base station is 90%. The historical success rate of the handover from the source primary base station to the target primary base station may be statistically obtained by the source primary base station. For example, the source primary base station initiates a total of 80 handover requests to the target primary base station (not limited to the specific terminal device) within the preset time period 3 (for example, 24 hours). If 60 handovers succeed, the historical success rate of the handover from the source primary base station to the target primary base station is 75%. For example, the source primary base station may send the historical success rate of the handover from the source primary base station to the target primary base station to the target primary base station. For example, the source primary base station may send the measurement information of the at least one cell and the historical success rate of the handover from the source primary base station to the target primary base station to the target primary base station through a same piece of information (for example, the handover request information), or through different pieces of information. This is not specifically limited.

For example, after the terminal device is handed over from the source primary base station to the target primary base station, the target primary base station sends the secondary base station addition request information to the target secondary base station if it is determined that a preset condition is met. The preset condition includes at least one of the following:
① The historical success rate of adding the target secondary base station by the target primary base station is greater than or equal to a threshold 3;
② The historical success rate of the handover from the source primary base station to the target primary base station is greater than or equal to a threshold 4; or
③ A product of the historical success rate of adding the target secondary base station by the target primary base station and the historical success rate of the handover from the source primary base station to the target primary base station is greater than or equal to a threshold 5.

For example, the threshold 3, the threshold 4, or the threshold 5 may be preconfigured.

For example, after receiving the measurement information of the at least one cell, the target primary base station may select the target secondary base station from the base station to which the at least one cell belongs. Further, the target primary base station may determine whether the historical success rate of adding the target secondary base station by the target primary base station is greater than or equal to the threshold 3. If the historical success rate of adding the target secondary base station by the target primary base station is greater than or equal to the threshold 3, before the terminal device is handed over from the source primary base station to the target primary base station, the target primary base station may send the secondary base station addition request information to the target secondary base station (that is, the foregoing first implementation). If the historical success rate of adding the target secondary base station by the target primary base station is less than the threshold 3, after the terminal device is handed over from the source primary base station to the target primary base station, the target primary base station may send the secondary base station addition request information to the target secondary base station (that is, S402).

For another example, after receiving the measurement information of the at least one cell, the target primary base station may select the target secondary base station from the base station to which the at least one cell belongs. Further, the target primary base station may determine whether the product of the historical success rate of adding the target secondary base station by the target primary base station and the historical success rate of the handover from the source primary base station to the target primary base station is greater than or equal to the threshold 4. If the product is greater than or equal to the threshold 4, before the terminal device is handed over from the source primary base station to the target primary base station, the target primary base station may send the secondary base station addition request information to the target secondary base station (that is, the foregoing first implementation). If the product is less than the threshold 4, after the terminal device is handed over from the source primary base station to the target primary base station, the target primary base station may send the secondary base station addition request information to the target secondary base station (that is, S402).

In the foregoing manner, the target primary base station autonomously determines a specific manner of adding the target secondary base station, making implementation more flexible. "The historical success rate of adding the target secondary base station by the target primary base station" is used as an example. When the historical success rate of adding the target secondary base station by the target primary base station is greater than or equal to the threshold 3, it indicates that the success rate of adding the target secondary base station by the target primary base station is higher. In this case, the target primary base station may send the secondary base station addition request information to the target secondary base station before the terminal device is handed over from the source primary base station to the target primary base station, thereby reducing the interruption duration of the service on the secondary base station while ensuring the success rate of adding the secondary base station. When the historical success rate of adding the target secondary base station by the target primary base station is less than the threshold 3, it indicates that the success rate of adding the target secondary base station by the target primary base station is lower. In this case, the target primary base station may send the secondary base station addition request information to the target secondary base station after the terminal device is handed over from the source primary base station to the target primary base station, to ensure the success rate of adding the secondary base station.

### Embodiment 2

In Embodiment 2, a possible detailed procedure is described based on the descriptions of Embodiment 1.

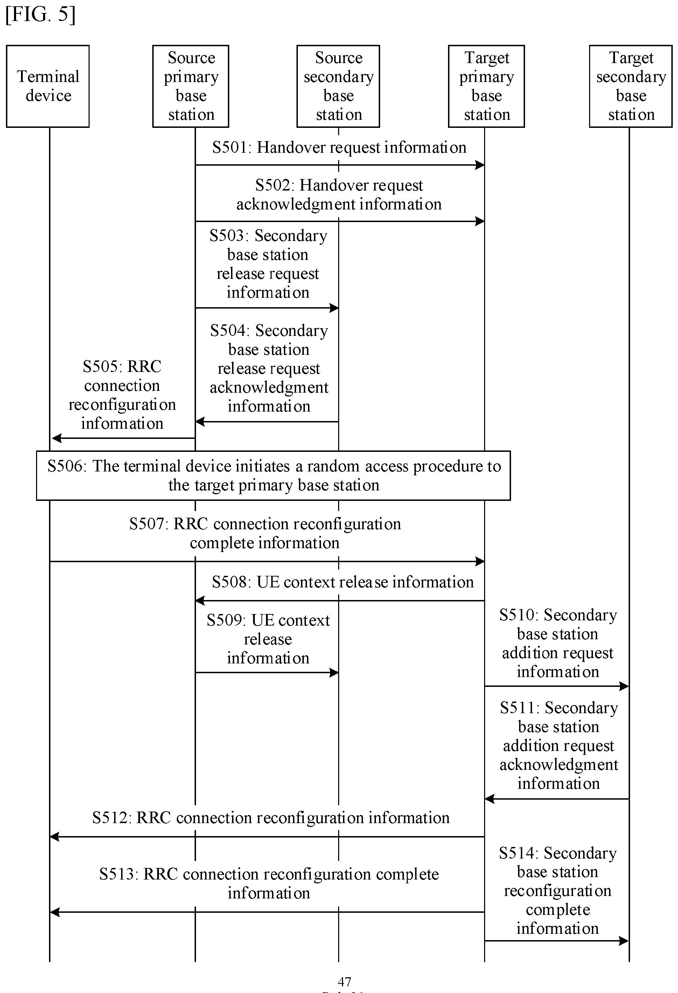

FIG. 5 is a schematic flowchart corresponding to a communication method according to Embodiment 2 of this application. As shown in FIG. 5, the procedure includes the following steps.

S501: A source primary base station sends handover request information to a target primary base station, where the handover request information includes measurement information of at least one cell, and correspondingly, the target primary base station receives the handover request information.

Herein, the measurement information of the at least one cell may be reported by a terminal device to the source primary base station.

S502: The target primary base station sends handover request acknowledgment information to the source primary base station, where the handover request acknowledgment information includes second configuration information, and the second configuration information includes a parameter used by the terminal device to hand over to the target primary base station.

S503: The source primary base station sends secondary base station release request information to a source secondary base station, and correspondingly, the source secondary base station receives the secondary base station release request information.

For example, the secondary base station release request information is used to request the source secondary base station to stop sending data to the terminal device.

S504: The source secondary base station sends secondary base station release request acknowledgment information to the source primary base station, and correspondingly, the source primary base station receives the secondary base station release request acknowledgment information.

S505: The source primary base station sends second information (namely, RRC connection reconfiguration information) to the terminal device, where the RRC connection reconfiguration information indicates the terminal device to hand over to the target primary base station.

Herein, the RRC connection reconfiguration information includes the second configuration information. After receiving the RRC connection reconfiguration information, the terminal device may release a connection between the terminal device and the source primary base station, and release a connection between the terminal device and the source secondary base station.

S506: The terminal device initiates a random access procedure to the target primary base station.

Herein, the terminal device may initiate the random access procedure to the target primary base station based on the second configuration information, to perform synchronization with the target primary base station through the random access procedure.

S507: The terminal device sends handover complete information (namely, RRC connection reconfiguration complete information) to the target primary base station, and correspondingly, after receiving the handover complete information, the target primary base station may determine that the terminal device is successfully handed over to the target primary base station.

S508: The target primary base station sends UE context release (UE context release) information to the source primary base station, to indicate the source primary base station to release a context of the terminal device.

S509: The source primary base station sends the UE context release information to the source secondary base station, to indicate the source secondary base station to release the context of the terminal device.

S510: The target primary base station sends secondary base station addition request information to a target secondary base station.

S511: The target secondary base station sends secondary base station addition request acknowledgment information to the target primary base station, where the secondary base station addition request acknowledgment information includes first configuration information, and the first configuration information includes a parameter used by the terminal device to connect to the target secondary base station.

S512: The target primary base station sends first information (namely, RRC connection reconfiguration information) to the terminal device, where the RRC connection reconfiguration information includes the first configuration information, and the RRC connection reconfiguration information indicates the terminal device to connect to the target secondary base station.

S513: The terminal device sends RRC connection reconfiguration complete information to the target primary base station.

Optionally, the terminal device may initiate a random access procedure to the target secondary base station. A specific occasion on which the terminal device initiates the random access procedure to the target secondary base station is not limited in this embodiment of this application.

S514: The target primary base station sends secondary base station reconfiguration complete information to the target secondary base station, and correspondingly, after receiving the secondary base station reconfiguration complete information, the target secondary base station may determine that a secondary base station is successfully added.

For Embodiment 1 and Embodiment 2, the following may be understood:
(1) In various embodiments of this application, unless otherwise specified or there is a logic conflict, terms and/or descriptions in different embodiments are consistent and may be referenced by each other. Technical features in different embodiments may be combined to form a new embodiment based on an internal logical relationship thereof. In addition, in a same embodiment, different implementations or different examples may reference or refer to each other.
(2) Various numbers in this application are merely used for differentiation for ease of description, but are not used to limit the scope of this application. Step numbers in the foregoing flowcharts are merely examples of execution procedures, and do not constitute a limitation on an execution sequence of the steps. In other words, the step numbers do not mean the execution sequence, and the execution sequence of each step should be determined based on a function and internal logic of the step. In addition, not all steps shown in the flowcharts are necessarily performed steps, and some steps may be added or deleted from the flowcharts according to an actual requirement.
(3) The information in this embodiment of this application may also be replaced with a message. For example, the RRC connection reconfiguration information may be replaced with an RRC connection reconfiguration message, the RRC connection reconfiguration complete information may be replaced with an RRC connection reconfiguration complete message, the secondary base station addition request information may be replaced with a secondary base station addition request message, and the secondary base station addition request acknowledgment information may be replaced with a secondary base station addition request acknowledgment message, which are not listed one by one.

The foregoing mainly describes the solutions provided in embodiments of this application from a perspective of interaction between the terminal device and the base station. It may be understood that, to implement the foregoing functions, the terminal device and the base station may include corresponding hardware structures and/or software modules for performing the functions. A person skilled in the art should be easily aware that, in combination with units and algorithm steps in examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device and the base station may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

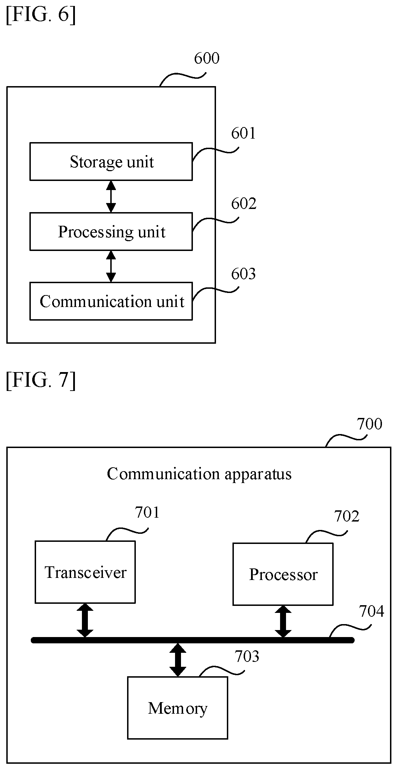

When the integrated unit is used, FIG. 6 is a block diagram of a possible example of an apparatus according to an embodiment of this application. As shown in FIG. 6, the apparatus 600 may include a processing unit 602 and a communication unit 603. The processing unit 602 is configured to control and manage an action of the apparatus 600. The communication unit 603 is configured to support communication between the apparatus 600 and another device. Optionally, the communication unit 603 is also referred to as a transceiver unit, and may include a receiving unit and/or a sending unit, respectively configured to perform a receiving operation and a transmitting operation. The apparatus 600 may further include a storage unit 601, configured to store program code and/or data of the apparatus 600.
(1) The apparatus 600 may be a target primary base station in the foregoing embodiments. The processing unit 602 may support the apparatus 600 in performing an action of the target primary base station in the foregoing method examples. Alternatively, the processing unit 602 mainly performs an internal action of the target primary base station in the method examples, and the communication unit 603 may support the communication between the apparatus 600 and the another device.

For example, in an embodiment, the communication unit 603 is configured to: receive measurement information of at least one cell from a source primary base station, and send secondary base station addition request information to a target secondary base station after a terminal device is handed over from the source primary base station to the target primary base station, where the target secondary base station is selected, based on the measurement information of the at least one cell, from a base station to which the at least one cell belongs.

In a possible design, the communication unit 603 is further configured to: receive secondary base station addition request acknowledgment information from the target secondary base station, where the secondary base station addition request acknowledgment information includes first configuration information, and the first configuration information includes a parameter used by the terminal device to connect to the target secondary base station; and send first information to the terminal device, where the first information includes the first configuration information, and the first information indicates the terminal device to connect to the target secondary base station.

In a possible design, the communication unit 603 is further configured to send second configuration information to the source primary base station, where the second configuration information includes a parameter used by the terminal device to hand over to the target primary base station.

In a possible design, the communication unit 603 is specifically configured to receive handover request information from the source primary base station, where the handover request information includes the measurement information of the at least one cell.

In a possible design, the processing unit 602 is configured to send the secondary base station addition request information to the target secondary base station through the communication unit 603 when a preset condition is met. The preset condition includes at least one of the following: A historical success rate of adding the target secondary base station by the target primary base station is greater than or equal to a first threshold; a historical success rate of a handover from the source primary base station to the target primary base station is greater than or equal to a second threshold; and a product of a historical success rate of adding the target secondary base station by the target primary base station and a historical success rate of a handover from the source primary base station to the target primary base station is greater than or equal to a third threshold.

In a possible design, the processing unit 602 is configured to: after determining that the terminal device is not handed over from the source primary base station to the target primary base station, delete the measurement information of the at least one cell.

In a possible design, the processing unit 602 is configured to: after the communication unit 603 receives handover cancel information from the source primary base station, determine, based on the handover cancel information, that the terminal device is not handed over from the source primary base station to the target primary base station; or if handover complete information from the terminal device is not received within a preset time period, determine that the terminal device is not handed over from the source primary base station to the target primary base station, where a start time of the preset time period is a time at which the measurement information of the at least one cell is received.

(2) The apparatus 600 may be the terminal device in the foregoing embodiments. The processing unit 602 may support the apparatus 600 in performing an action of the terminal device in the foregoing method examples. Alternatively, the processing unit 602 mainly performs an internal action of the terminal device in the method examples, and the communication unit 603 may support the communication between the apparatus 600 and the another device.

For example, in an embodiment, the communication unit 603 is configured to: send the measurement information of the at least one cell to the source primary base station; receive second information from the source primary base station, where the second information indicates the terminal device to hand over to the target primary base station; and after the terminal device is handed over to the target primary base station, receive the first information from the target primary base station based on the second information, where the first information indicates the terminal device to establish a connection to the target secondary base station, and the target secondary base station is selected, based on the measurement information of the at least one cell, from the base station to which the at least one cell belongs. The processing unit 602 is configured to establish the connection to the target secondary base station based on the first information.

It should be understood that division of units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented in a form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form of a program scheduled by a processing element, the processing element may be a processor, for example, a general-purpose central processing unit (central processing unit, CPU) or another processor that can invoke the program. For another example, the units may be integrated together and implemented in a form of a SoC.

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to the another apparatus. For example, when the apparatus is implemented in the manner of the chip, the sending unit is an interface circuit that is of the chip and that is configured to send a signal to the another chip or apparatus.

Based on the foregoing embodiments, an embodiment of this application further provides a communication apparatus. As shown in FIG. 7, the communication apparatus 700 may include a processor 702. Optionally, the communication apparatus 700 further includes a memory 703. Optionally, the communication apparatus 700 further includes a transceiver 701. The memory 703 may be disposed inside the communication apparatus 700, or may be disposed outside the communication apparatus 700. The processor 702 may control the transceiver 701 to receive and send information and the like.

Specifically, the processor 702 may be a central processing unit (central processing unit, CPU), a network processor (network processor, NP), or a combination of a CPU and an NP. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The transceiver 701, the processor 702, and the memory 703 are connected to each other. Optionally, the transceiver 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 7, but this does not mean that there is only one bus or only one type of bus.

In an optional implementation, the memory 703 is configured to store a program and the like. Specifically, the program may include program code, and the program code includes computer operation instructions. The memory 703 may include a RAM, and may further include a non-volatile memory (non-volatile memory), for example, one or more disk memories. The processor 702 executes an application stored in the memory 703 to implement the foregoing functions and functions of the communication apparatus 700.

For example, the communication apparatus 700 may be a transmit end (for example, a terminal device) in the foregoing embodiments, or may be a receive end (for example, a network device) in the foregoing embodiments.

In an embodiment, when the communication apparatus 700 implements a function of the transmit end in the foregoing method embodiments, the transceiver 701 may implement a receiving/sending operation performed by the transmit end in the foregoing method embodiments, and the processor 702 may implement an operation other than the receiving/sending operation performed by the transmit end in the foregoing method embodiments. Specifically, for related specific descriptions, refer to related descriptions in the foregoing embodiments. Details are not described herein again.

In another embodiment, when the communication apparatus 700 implements a function of the receive end in the foregoing method embodiments, the transceiver 701 may implement a receiving/sending operation performed by the receive end in the foregoing method embodiments, and the processor 702 may implement an operation other than the receiving/sending operation performed by the receive end in the foregoing method embodiments. Specifically, for related specific descriptions, refer to related descriptions in the foregoing embodiments. Details are not described herein again.

In addition, an embodiment of this application further provides a communication system. The communication system includes at least one of a terminal device, a source primary base station, a source secondary base station, a target primary base station, and a target secondary base station.

Terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. A character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
receiving measurement information of at least one cell from a source primary base station; and
sending secondary base station addition request information to a target secondary base station after a terminal device is handed over from the source primary base station to a target primary base station, wherein the secondary base station addition request information is used to add a secondary base station corresponding to the target primary base station, and the target secondary base station is selected, based on the measurement information of the at least one cell, from a base station to which the at least one cell belongs.

2. The method according to claim 1, wherein the method further comprises:
receiving secondary base station addition request acknowledgment information from the target secondary base station, wherein the secondary base station addition request acknowledgment information comprises first configuration information, and the first configuration information comprises a parameter used by the terminal device to connect to the target secondary base station; and
sending first information to the terminal device, wherein the first information comprises the first configuration information, and the first information indicates the terminal device to establish a connection to the target secondary base station.

3. The method according to claim 1 or 2, wherein the method further comprises: sending second configuration information to the source primary base station, wherein the second configuration information comprises a parameter used by the terminal device to hand over to the target primary base station.

4. The method according to any one of claims 1 to 3, wherein receiving the measurement information of the at least one cell from the source primary base station comprises:
receiving handover request information from the source primary base station, wherein the handover request information is used to request to hand over the terminal device to the target primary base station, and the handover request information comprises the measurement information of the at least one cell.

5. The method according to any one of claims 1 to 4, wherein sending the secondary base station addition request information to the target secondary base station after the terminal device is handed over from the source primary base station to the target primary base station comprises:
after the terminal device is handed over from the source primary base station to the target primary base station, sending the secondary base station addition request information to the target secondary base station if a preset condition is met, wherein
the preset condition comprises at least one of the following:
a historical success rate of adding the target secondary base station by the target primary base station is greater than or equal to a first threshold;
a historical success rate of a handover from the source primary base station to the target primary base station is greater than or equal to a second threshold; and
a product of a historical success rate of adding the target secondary base station by the target primary base station and a historical success rate of a handover from the source primary base station to the target primary base station is greater than or equal to a third threshold.

6. The method according to any one of claims 1 to 5, wherein the source primary base station and the target primary base station correspond to a first communication standard, and the target secondary base station corresponds to a second communication standard.

7. A communication method, wherein the method comprises:
sending measurement information of at least one cell to a source primary base station;
after a terminal device is handed over from the source primary base station to the target primary base station, receiving first information from the target primary base station, wherein the first information indicates the terminal device to establish a connection to a target secondary base station, and the target secondary base station is selected, based on the measurement information of the at least one cell, from a base station to which the at least one cell belongs; and
establishing the connection to the target secondary base station based on the first information.

8. The method according to claim 7, wherein the source primary base station and the target primary base station correspond to a first communication standard, and the target secondary base station corresponds to a second communication standard.

9. A communication method, wherein the method comprises:
sending, by a terminal device, measurement information of at least one cell to a source primary base station;
sending, by the source primary base station, the measurement information of the at least one cell to a target primary base station after receiving the measurement information of the at least one cell; and
sending, by the target primary base station, secondary base station addition request information to a target secondary base station after the terminal device is handed over from the source primary base station to the target primary base station, wherein the secondary base station addition request information is used to add a secondary base station corresponding to the target primary base station, and the target secondary base station is selected, based on the measurement information of the at least one cell, from a base station to which the at least one cell belongs.

10. The method according to claim 9, wherein the method further comprises:
sending, by the target secondary base station, secondary base station addition request acknowledgment information to the target primary base station, wherein the secondary base station addition request acknowledgment information comprises first configuration information, and the first configuration information comprises a parameter used by the terminal device to connect to the target secondary base station;
receiving, by the target primary base station, the first configuration information, and sending first information to the terminal device, wherein the first information comprises the first configuration information, and the first information indicates the terminal device to connect to the target secondary base station; and
establishing, by the terminal device, a connection to the target secondary base station based on the first information.

11. The method according to claim 9 or 10, wherein the method further comprises:
sending, by the target primary base station, second configuration information to the source primary base station, wherein the second configuration information comprises a parameter used by the terminal device to hand over to the target primary base station;
receiving, by the source primary base station, the second configuration information, and sending second information to the terminal device, wherein the second information indicates the terminal device to hand over to the target primary base station, and the second information comprises the second configuration information; and
receiving, by the terminal device, the second information, and handing over to the target primary base station based on the second information.

12. The method according to any one of claims 9 to 11, wherein after the terminal device is handed over from the source primary base station to the target primary base station, the target primary base station sends the secondary base station addition request information to the target secondary base station if it is determined that a preset condition is met; and
the preset condition comprises at least one of the following:
a historical success rate of adding the target secondary base station by the target primary base station is greater than or equal to a first threshold;
a historical success rate of a handover from the source primary base station to the target primary base station is greater than or equal to a second threshold; and
a product of a historical success rate of adding the target secondary base station by the target primary base station and a historical success rate of a handover from the source primary base station to the target primary base station is greater than or equal to a third threshold.

13. A communication system, wherein the system comprises a source primary base
station and a target primary base station;
the source primary base station is configured to send measurement information of at least one cell to the target primary base station; and
the target primary base station is configured to perform the method according to any one of claims 1 to 6.

14. The system according to claim 13, wherein the system further comprises a terminal device, and the terminal device is configured to perform the method according to claim 7 or 8.

15. A communication apparatus, comprising a module configured to perform the method according to any one of claims 1 to 8.

16. A communication apparatus, comprising a processor, wherein the processor is coupled to a memory, the memory stores a computer program, and the processor is configured to invoke a part or all of the computer program in the memory, and the method according to any one of claims 1 to 8 is performed.

17. A computer-readable storage medium, wherein the storage medium stores a computer program, and when a part or all of the computer program is executed by a computer, the method according to any one of claims 1 to 8 is performed.

18. A computer program product, wherein when a computer reads and executes the
computer program product, the method according to any one of claims 1 to 8 is performed.
